# EUROPÄISCHE PATENTSCHRIFT

(11) **EP 0 668 973 B1**
(45) Veröffentlichungstag und Bekanntmachung des Hinweises auf die Patenterteilung: **15.05.1996**
(21) Anmeldenummer: 94900805.6
(22) Anmeldetag: 11.11.1993
(51) Int. Cl.: F16H 1/28, F16H 1/34

(54) **Umlaufrollengetriebe mit zwei eine Innenprofilierung aufweisenden Ringen und einem an der Innenseite der Ringe abrollbaren Abwälzelement**
Epicyclic roller gear with two rings having an inner profile and a rolling element capable of rolling on the inner side of the rings
Engranage épicycloidal à rouleaux avec deux anneaux pourvus d'un profil interne et un element de roulement roulant sur la face interne des anneaux

(30) Priorität: 17.11.1992 DE 4238788
(43) Veröffentlichungstag der Anmeldung: 30.08.1995
(73) Patentinhaber: NEUGART GMBH & CO., D-77971 Kippenheim (DE)
(72) Erfinder: IFRIM, Vasile, D-77694 Kehl/Rhein (DE); IFRIM, Annedore, D-77694 Kehl/Rhein (DE)
(74) Vertreter: Schmitt, Hans, Dipl.-Ing.
(86) Internationale Anmeldenummer: EP9303163
(87) Internationale Veröffentlichungsnummer: WO9411651

(56) Entgegenhaltungen:
- CH-A- 446 845
- FR-A- 921 199
- GB-A- 332 501
- US-A- 2 802 377

## Beschreibung

Die Erfindung betrifft ein Umlaufrollengetriebe mit zwei eine Innenprofilierung oder Innenverzahnung aufweisenden Ringen, wobei ein erster Ring feststeht und ein zweiter Ring parallel oder koaxial zu dem ersten Ring angeordnet und relativ zu diesem drehbar gelagert ist und die Zähnezahl an der Innenprofilierung der den beiden Ringe verschieden ist, mit wenigstens einem drehbaren, an der profilierten Innenseite der Ringe abrollbaren Abwälzelement, welches an seiner Außenseite abwechselnd Lücken und Vorsprünge hat, die mit den Innenprofilierungen oder Innenverzahnungen beider Ringe kämmen, wobei das Abwälzelement an einem Steg oder dergleichen drehbar gelagert ist, welcher Steg oder dergleichen eine in der Mitte der Ringe angeordnete Achse oder Welle drehbar ist und dadurch das Abwälzelement in Umfangsrichtung entlang den Innenseiten der Ringe mitnimmt, so daß aufgrund der unterschiedlichen Zähnezahlen an der Innenseite der beiden Ringe der drehbare Ring relativ zu dem feststehenden Ring bewegbar ist.

Derartige Umlaufrollengetriebe mit einem sich abrollenden Abwälzelement sind bekannt. Vor allem lassen sich dadurch hohe Über- oder Untersetzungen herstellen. Nachteilig ist dabei jedoch, daß die Vorsprünge des Abwälzelementes gegenüber der Innenprofilierung der Ringe keine Zwangsführung haben, sondern zusätzliche Maßnahmen getroffen werden müssen, damit innerhalb des Getriebes beispielsweise bei einem Lastwechsel kein Spiel oder keine Freilaufbewegungen oder dergleichen auftreten. Eine spielfreie Kraftübertragung kann nicht erreicht werden. Es wird deshalb versucht, mit sogenannten verspannten Zahnrädern diese Nachteile zu beseitigen. Dadurch werden jedoch die Fertigungskosten erhöht und die Kraftübertragung beeinträchtigt.

Ferner ist es bekannt, mit elastischen Käfigen oder flexiblen Werkstoffen der einzelnen Teile eine Spielfreiheit zu bewirken, wodurch jedoch die übertragbaren Kräfte begrenzt werden und höhere Reibungen auftreten, die den Wirkungsgrad verschlechtern.

Es besteht deshalb die Aufgabe, ein Getriebe der eingangs erwähnten Art zu schaffen, mit dem große Untersetzungen hergestellt werden können, gleichzeitig aber ein hoher Wirkungsgrad und zwangsweise Spielfreiheit erreicht wird.

Die Lösung dieser Aufgabe besteht bei einem Umlaufrollengetriebe mit zwei jeweils eine Innenprofilierung oder Innenverzahnung aufweisenden Ringen der eingangs erwähnten Art darin, daß jeder der beiden Ringe wenigstens zwei parallel zueinander angeordnete Innenprofilierungen oder Innenverzahnungen hat, die in Umfangsrichtung um einen Bruchteil der Profil- oder Zahnteilung gegeneinander verdreht oder versetzt angeordnet sind, wobei die Innenprofilierungen oder Innenverzahnungen eines Ringes übereinstimmen, die Innenprofilierungen oder Innenverzahnungen der beiden Ringe aber voneinander verschieden sind, daß an dem Abwälzelement die Anzahl der Innenprofilierungen oder Innenverzahnungen der Ringe entsprechend viele axial nebeneinander angeordnete Gegenprofilierungen mit Lücken und Vorsprüngen angeordnet sind, die dem Versatz der Innenprofilierungen oder Innenverzahnungen an den Ringen entsprechend in Umfangsrichtung gegeneinander versetzt sind, und daß der an der einen Innenprofilierung oder Innenverzahnung eines Ringes angreifende Vorsprung des Abwälzelementes in Vorwärtsrichtung und der gleichzeitig in die benachbarte Innenprofilierung oder Innenverzahnung desselben Ringes eingreifende Vorsprung in entgegengesetzter Richtung anliegen und beim Abrollen des Abwälzelementes dieser Angriff seiner Vorsprünge kontinuierlich wechselt.

Durch die Verwendung von jeweils wenigstens zwei in Umfangsrichtung etwas gegeneinander versetzten Innenprofilierungen ergibt sich mit dem Abwälzelement und den daran ebenfalls versetzten Vorsprüngen eine bessere Überdeckung der zusammenwirkenden Profile und Vorsprünge und außerdem besteht an jedem Ring von vorneherein Spielfreiheit, zumal immer wenigstens zwei Vorsprünge gleichzeitig im Eingriff sind, die gegeneinander so angeordnet sind, daß auch bei einer kurzzeitigen Überholbewegung oder dergleichen keine Voreilung oder Nacheilung des Abwälzelementes gegenüber dem zugehörigen Ring möglich ist. Es wird also Spielfreiheit erreicht, ohne daß Federn oder elastische Getriebeteile oder sonstige den Wirkungsgrad beeinträchtigende Maßnahmen zum Einsatz kommen. Entsprechend leichtgängig und mit gutem Wirkungsgrad kann das Getriebe laufen. Aufgrund der unterschiedlichen Zähnezahl des festen Ringes gegenüber dem drehbaren Ring ergibt sich während des Abrollens des Abwälzelementes entlang dem Innenumfang der Profilierung oder Verzahnung die an sich bekannte Relativdrehung des drehbaren Ringes. Da an jedem Ring gleichzeitig zwei Vorsprünge des abrollbaren Abwälzelementes angreifen, ergibt sich eine große Überdeckung, die es erlaubt, das Abwälzelement mit entsprechend kleinem Durchmesser zu fertigen, so daß auch die Außenabmessung des gesamten Getriebes kleingehalten werden kann.

Besonders günstig ist es, wenn bei Verwendung von zwei Ringen mit jeweils zwei parallel zueinander angeordneten Innenprofilierungen oder Innenverzahnungen diese um eine halbe Profil- oder Zahnteilung gegeneinander in Umfangsrichtung versetzt angeordnet sind. Ringe mit jeweils zwei gegeneinader versetzten Innenprofilierungen sind relativ preiswert, beispielsweise aus zwei nachträglich zusammengesetzten Ringteilen herstellbar und haben gleichzeitig die vorerwähnten Vorteile einer spielfreien Betätigung mit hohem Wirkungsgrad bei vergleichsweise kleiner Außenabmessung.

Eine Ausgestaltung der Erfindung von ganz erheblicher Bedeutung, die die Leichtgängigkeit und den Wirkungsgrad des Getriebes verbessert und eine spielfreie Betätigung erlaubt, kann darin bestehen, daß das Abwälzelement ein drehbar gelagerter Rollenträger ist, an dessen Umfang als Vorsprünge zum Eingriff in die Innenverzahnungen der Ringe jeweils einzelne drehbare Rollen vorgesehen sind, daß die einzelnen Rollen an dem Rollenträger entsprechend dem Versatz der Innenprofilierungen oder Innenverzahnungen an den Ringen ihrerseits in Umfangsrichtung an dem Rollenträger versetzt und derart angeordnet sind, daß mit jeder Innenprofilierung oder Innenverzahnung der Ringe jeweils passend angeorndete Rollen zusammenwirken oder kämmen, und daß die an der einen Innenprofilierung oder Innenverzahnung eines Ringes angreifende Rolle in Vorwärtsrichtung und die gleichzeitig in die benachbarte Innenprofilierung oder Innenverzahnung desselben Ringes eingreifende Rolle in entgegengesetzter Richtung anliegt und sich bei der Drehung und dem Umlauf des Rollenträgers so abwälzen, daß dieser Angriff der Rollen kontinuierlich wechselt.

Durch die als Rollen ausgebildeten Vorsprünge wird die Reibung bei der Abrollbewegung des Wälzelementes weiter vermindert und gleichzeitig ein guter Kraftschluß erreicht, bei dem die jeweils entgegengesetzte Anlage der Rollen an den Innenprofilierungen eines Ringes die zwangsweise Spielfreiheit bewirkt. Es wird also ein sehr hoher Wirkungsgrad mit dieser Spielfreiheit gleichzeitig erreicht, nachdem die Rollen an den Flanken der Zähne oder Profile an der Innenprofilierung oder Innenverzahnung der Ring leichtgängig entlangrollen können.

Die Innenprofilierung oder Innenverzahnung zwischen den einzelnen Zähnen hat dabei eine bogenförmige Kontur, die stetig in die Zahnflanken übergeht, und die Rollen können sich bei dem Umlauf des Rollenträgers kontinuierlich in dem Zwischenraum zwischen zwei Zähnen der Innenprofilierung des Ringes abrollen und dann in den entsprechenden Nachbar-Zwischenraum eintreten. Es ergibt sich somit ein leichtgängiges Abrollen mit einem entsprechend guten Wirkungsgrad des Getriebes.

Insgesamt wird also erreicht, daß die jeweils gleichzeitig an den Innenverzahnungen oder Innenprofilierungen des jeweiligen Ringes angreifenden Vorsprünge oder Rollen so versetzt sind, daß der Angriff des Abwälzelementes oder Rollenträgers an dem jeweiligen Ring zwangsweise spielfrei ist. Federelemente, elastische Getriebeteile und dergleichen können vermieden werden.

Für eine gute spielfreie, ruckfreie Kraftübertragung und Übersetzung beziehungweise Untersetzung können an dem Rollenträger für jede Innenprofilierung oder Innenverzahnung wenigstens zwei, drei oder vier Vorsprünge oder Rollen gleichmäßig am Umfang verteilt vorgesehen sein und der Rollenträger kann somit insgesamt wenigstens acht, zwölf oder sechzehn Rollen aufweisen. Wenn beispielweise in jeder der übertragenden Durchmesserebenen des Rollenträgers vier derartige Rollen mit Zwischenräumen zum Zusammenwirken mit den Zähnen der Innenprofilierung der Ringe vorgesehen sind, also gewissermaßen nur alle 90° eine solche Rolle angeordnet ist, ergibt sich dennoch aufgrund des Versatzes der Innenprofilierung an dem Ring und der entsprechenden gleichzeitigen Beaufschlagung durch die Rollen benachbarter Radialebenen eine gute Überdeckung zwischen dem Rollenträger und der Innenverzahnung. Somit kann der Rollenträger einen relativ kleinen Außendurchmesser haben und trotzdem eine gute Kraftübertragung ermöglichen.

Für die Kraftübertragung ist es günstig, wenn an dem Steg wenigstens zwei einander vorzugsweise auf einem Durchmesser gegenüberliegende, drehbar gelagerte Rollenträger übereinstimmender Form und Größe oder drei am Innenumfang der Ringe gleichmäßig verteilt angreifende Rollenträger vorgesehen sind. Das von einer Welle auf die Rollenträger übertragene Drehmoment wird somit gleichmäßig verteilt.

Bei einem Umlaufrollengetriebe mit zwei Ringen, die jeweils zwei in Umfangsrichtung gegeneinander versetzte Innenprofilierungen haben, können an dem Rollenträger insgesamt vier axial nebeneinanderliegende Rollensätze vorgesehen sein, bei denen jeweils die mit einer Innenprofilierung oder Innenverzahnung kämmenden Rollen gleichmäßig am Umfang des jeweiligen Rollenträgers verteilt sind, wobei die in Umfangsrichtung gegeneinander versetzten Rollen zum Zusammenwirken mit dem einen Ring und die zum Zusammenwirken mit dem anderen Ring jeweils koaxial zueinander angeordnet sind beziehungsweise einen übereinstimmenden Versatz in Umfangsrichtung des Rollenträgers haben. Die Rollen einer ersten Innenverzahnung des einen Ringes sind also koaxial zu Rollen zum Zusammenwirken mit einer ersten Innenverzahnung des zweiten Ringes angeordnet, während zum Zusammenwirken mit den jeweils versetzten Innenprofilierungen dieser beiden Ringe die Rollen wiederum in gleicher Weise versetzt sind und dabei ebenfalls koaxial zueinander angeordnet sind. Dadurch wird sichergestellt, daß das Umlaufen des Rollenträgers den drehbaren Ring aufgrund seiner von dem feststehenden Ring abweichenden Zähnezahl mit hoher Untersetzung verdreht.

Die an einer übereinstimmenden Stelle des Umfanges des Rollenträgers angeordneten Rollen können zum Zusammenwirken mit jeweils einer Innenprofilierung oder Innenverzahnung der beiden Ringe auf einer durchgehenden Achse angeordnet sein und alle die in Umfangsrichtung gegeneinander versetzten Rollen tragenden Achsen können in achsialer Richtung an dem Rollenträger durchgehend vorgesehen sein, wobei jede zweite Achse jeweils versetzt die entsprechenden Rollen trägt. Dabei können jeweils zwischen den einzelnen Rollen an dem Rollenträger hochstehende Bunde oder dergleichen zum Trennen der Rollen voneinander und zum Lagern der durchgehenden Achsen vorgesehen sein. Insgesamt ergibt sich somit ein Rollenträger mit an seinem Umfang gleichmäßig verteilten Achsen, wobei ein Rollenträger mit jeweils vier Rollen in den einzelnen Ebenen insgesamt acht derartige Achsen hat. Dies führt zu einer konstruktiv einfachen Lösung, die auch einfach gefertigt werden kann, weil die Bohrungen zur Aufnahme der Achsen einfach durchgehend angefertigt werden können und die Achsen als durchgehende Stifte eingesteckt und fixiert werden können.

Der drehbar gelagerte Ring kann über eine insbesondere mit seiner Stirnseite und/oder Außenseite verbundene Scheibe oder Glocke mit einer in Flucht mit der Antriebsachse angeordneten Abtriebsachse verbunden sein. Auf diese Weise ergibt sich eine koaxiale Anordnung von Antriebs- und Abtriebswelle und dennoch dazwischen eine hohe Untersetzung.

Für eine Übersetzung zur Erhöhung der Drehzahl können Antrieb und Abtrieb vertauscht sein. Dies ist deshalb möglich, weil das Getriebe aufgrund der Spielfreiheit und des hohen Wirkungsgrades leichtgängig und ohne Selbsthemmung betrieben werden kann.

Vor allem bei Kombination einzelner oder mehrerer der vorbeschriebenen Merkmale und Maßnahmen ergibt sich ein Umlaufrollengetriebe mit zwei innenprofilierten Ringen, einer Welle und einem mit Rollelementen oder Rollen bestückten, mit der Welle verbundenen Rollenträger, wobei die innenprofilierten Ringe jeweils mindestens zwei einander benachbarte Profilebenen und der Rollenträger mindestens vier um eine gemeinsame Welle drehbare Rollebenen aufweist und wobei die Profile der Ringe derart bearbeitet sind, daß sie mit jeweils mindestens einer Rolle der Rollenebene, welche nicht weniger als zwei Rollen pro Ebene aufweisen, einen momentanen Formschluß bilden. Dieser Formschluß jeweils in zwei Rollenebenen schafft ohne Zusatzmaßnahmen die gewünschte Spielfreiheit, wobei die Verwendung der Rollen an einer entsprechend günstig profilierten Innenverzahnung dennoch eine leichtgängige Drehbarkeit ergibt.

Anstelle eines direkten Antriebes des oder der Rollenträger über eine den Steg zur Lagerung der Rollenträger beaufschlagenden Welle kann die mit dem oder den Rollenträgern drehbare Welle Außenprofilierungen aufweisen oder tragen, welche derart bearbeitet sind, daß sie mit je einer Rolle des Rollenträgers mindestens in zwei Rollebenen einen momentanen Formschluß bilden. Dadurch kann die Untersetzung verstärkt werden, da die Profilierung an der Antriebswelle im Zusammenwirken mit den Rollenträgern eine zusätzliche Getriebestufe darstellt.

Besonders günstig ist es dabei, wenn der oder die Rollenträger auf ihrer den Ringen und deren Innenprofilierung gegenüberliegenden - der Mitte der Ringe zugewandten - Seite mit einem eine Außenprofilierung aufweisenden Drehkörper, insbesondere einem eine Verzahnung aufweisenden Drehkörper kämmen, daß der Drehkörper mit der Antriebswelle drehfest oder einstückig verbunden ist und daß er mehrere in axialer Richtung parallele Zahnkränze aufweist, deren in axialer Richtung nebeneinander angeordnete Zähne in Umfangsrichtung um den Betrag gegeneinander versetzt sind, um den die einzelnen Rollen und die Zähne der Innenprofilierung der Ringe in Umfangsrichtung versetzt sind. Somit erfolgt die Übertragung der Antriebskraft von diesem zentralen Drehkörper gleichzeitig an allen Vorsprüngen oder Rollen des Abwälzelementes oder Rollenträgers, also mit bestmöglicher Überdeckung und bestmöglich verteilt. Bei relativ kleinem Außendurchmesser wird also eine spielfreie Kraftübertragung von diesem zentralen Drehkörper oder auf diesen zentralen Drehkörper ermöglicht, wobei dieser aufgrund der guten Überdeckung einen relativ kleinen Außendurchmesser haben kann. Somit wird die Außenabmessung des Getriebes durch diese zusätzliche Getriebestufe nicht oder nicht nennenswert vergößert.

Eine Ausgestaltung des Umlaufrollengetriebes von ganz besonderer Bedeutung kann darin bestehen, daß die Zahl der Zähne und/oder die Form der Zähne in Umfangsrichtung wenigstens eines der beiden Ringe und/oder des zentralen Drehkörpers über einen Teil des Umfanges wechselt, so daß in einem Abschnitt des Umfanges mehr und/oder anders geformte Zähne als in einem oder mehreren anderen Abschnitten angeordnet sind. Dadurch kann erreicht werden, daß während einer gleichmäßigen Antriebsbewegung die Abtriebsbewegung unregelmäßig ist, d.h. abwechselnd schneller und langsamer erfolgt oder sogar zeitweise stillsteht und/oder sogar ihre Richtung ändert. Somit kann das Getriebe für Schrittschaltvorgänge eingesetzt werden, selbst wenn der Antrieb stetig läuft. Erreicht wird dies durch die einfache Maßnahme, die Zahl der Zähne beziehungsweise die Krümmung der Zahnflanken zu ändern. Die dazu jeweils erforderlichen Konturen der Zahnkurven sind dem Durchschnittsfachmann bekannt und können mit den bekannten Bewegungsgesetzen berechnet werden. Für lineare oder ruck- und stoßfreie Bewegungsänderungen sind entsprechende Verzahnungsbilder bekannt. Diese Anordnung läßt sich besonders günstig realisieren, wenn das erfindungsgemäße Getriebe mit den in Umfangsrichtung versetzten Innenprofilierungen an den Ringen vorgesehen ist, weil dadurch eine spielfreie Arbeitsweise des Getriebes gegeben ist, bei welcher solche Änderungen der Drehzahl des drehbaren Ringes während eines Umlaufes stoßfrei und mit entsprechenden Übergängen gestaltet werden können.

Die Zähne in den in axialer Richtung einander benachbarten Ebenen an dem Antriebselement und/oder den Ringen können derart bearbeitet sein, daß sie in Teilbereichen der gleichen Ebene unterschiedliche Profile aufweisen. Dies läßt sich besonders günstig herstellen, wenn die Ringe und/oder der als Antriebselement dienende Drehkörper zu ihrer eigenen Fertigung aus parallelen Scheiben oder Ringen zusammengefügt werden.

Damit während eines Umlaufes ein Stillstand des Abtriebes erreicht werden kann, kann die Profilierung oder Verzahnung der Ringe und/oder des zentralen Drehkörpers derart ausgebildet sein, daß die Ringe und/oder der Drehkörper in bestimmten Umfangs- oder Winkelbereichen unterschiedlicher Ebenen gleiche Profile oder Formen und/oder Abstände aufweisen. Wenn die Innenprofilierungen der beiden Ringe übereinstimmen, erfolgt keine Drehbewegung, wenn der Abwälzkörper oder Rollenträger umläuft. Somit erfolgt ein kurzzeitiger Stillstand des drehbaren Ringes, wenn der Abwälzkörper oder Rollenträger den Umfangs- oder Winkelbereich beaufschlagt, der eine übereinstimmende Profilierung zu der des anderen Ringes hat. Auf diese Weise kann also der erwünschte kurzzeitige Stillstand des Abtriebes bei stetig laufendem Antrieb an dem erfindungsgemäßen Umlaufrollengetriebe erreicht werden, wobei die Änderungen der Umlaufgeschwindigkeiten des drehbaren Ringes ruckfrei erfolgen können, weil das erfindungsgemäße Getriebe aufgrund der Verwendung von wenigstens zwei in Umfangsrichtung versetzten Innenprofilierungen an dem Ring bei guter Überdeckung mit dem Abwälzelement spielfrei ist.

Damit auch der Rollenträger leichtgängig verdreht werden kann, gleichzeitig aber eine einfache Herstellung erlaubt, kann für die drehbare Lagerung des Rollenträgers an dem Steg wenigstens eine Welle oder Achse vorgesehen sein.

Bei Kombination einzelner oder mehrerer der vorbeschriebenen Maßnahmen ergibt sich ein Umlaufrollengetriebe, welches dadurch gekennzeichnet ist, daß zwischen Umfangsbereichen der Ringe und/oder des zentralen Drehkörpers - falls er vorhanden ist - mit unterschiedlichen Zähnezahlen und/oder Zahnformen die Zähne und deren Abstand eine einen stoßfreien Übergang der relativen Drehung ermöglichende Form haben, in dem die Übertragungsfunktion der Übergänge zwischen den unterschiedlichen Profilen der jeweils gleichen Ebene mindestens in der ersten Ableitung den Wert unterschiedlich von Null beziehungsweise Stoßfreiheit aufweisen. Mit Hilfe der Übertragungsfunktion lassen sich also die entsprechenden Zähnezahlen und Zahnformen berechnen, um einen stoßfreien Übergang bei wechselnden Drehgeschwindigkeiten zu ermöglichen.

Eine weitere Ausgestaltung des erfindungsgemäßen Umlaufrollengetriebes kann darin bestehen, daß an dem drehbaren Ring außenseitig ein Antrieb und/oder Abtrieb angekuppelt ist. Statt also eine zentrale koaxiale Welle mit diesem drehbaren Ring zu verbinden, kann unmittelbar an diesem Ring eine entsprechende Kraftübertragung erfolgen.

Beispielsweise kann an der Außenseite des drehbaren Ringes insbesondere an seinem Außenumfang ein Hebelarm für einen Kraftangriff und/oder eine Verzahnung oder Teilverzahnung zum Zusammenwirken mit einer Gegenverzahnung an einem Zahnrad oder einer Zahnstange oder dergleichen angeordnet sein. Somit können von dem Antrieb des Getriebes über den drehbaren Ring beliebige weitere Elemente angetrieben werden oder umgekehrt kann an dem drehbaren Ring eine Antriebskraft eingeleitet werden, die dann an der Welle in eine Drehbewegung umgesetzt wird, welche mit den Abwälzkörpern oder Rollenträgern verbunden ist. Ist eine umlaufende Außenverzahnung vorgesehen, kann das Umlaufrollengetriebe seinerseits Stufe in einem Zahnradgetriebe sein.

Es ist aber auch möglich, daß zum Angriff an der Außenverzahnung des drehbaren Ringes und einer damit kämmenden Zahnstange oder dergleichen ein oder zwei Arbeitszylinder vorgesehen sind. Somit können Hin- und Herbewegungen dieser Arbeitszylinder auf den drehbaren Ring übertragen werden, der entsprechende Teildrehungen durchführt, die bei Einsatz einer entsprechenden sich ändernden Innenverzahnung dennoch in einer Richtung laufende Drehbewegung an der Welle umgesetzt werden kann, die den oder die Abwälzkörper oder Rollenträger aufweist. Somit erlaubt das Umlaufrollengetriebe mit einem drehbaren Ring mit in Umfangsrichtung sich ändernden oder wechselnden Zähnezahlen und/oder Zahnprofilierungen eine Umwandlung einer Hin- und Herbewegung in eine Drehbewegung. Statt Arbeitszylindern können auch Spindelantriebe oder dergleichen eine lineare Bewegung durchführende Antriebe vorgesehen sein, deren Linearbewegung in der geschilderten Weise in eine Drehbewegung umgewandelt werden kann. Umgekehrt kann auf diese Weise eine Drehbewegung in eine Hin- und Herbewegung umgewandelt werden, wenn der Antrieb an der die Abwälzkörper oder Rollenträger aufweisenden Welle erfolgt und der drehbare Ring aufgrund seiner Innenprofilierung beim Umlauf der Abwälzkörper oder Rollenträger jeweils seine Drehrichtung ändert, weil eine Hälfte seiner Innenprofilierung eine größere und die andere Hälfte eine kleinere Zähnezahl als der feststehende Ring hat.

Zur Ausnutzung beispielsweise von Windkraft können an einem, zwei oder mehreren mit dem drehbaren Ring starr verbundenen Hebelarm um eine etwa auf einem Radius zu dem Ring angeordnete Achse drehbar gelagerte Flügel vorgesehen sein, die in der einen Richtung mit ihrer Fläche quer zur Durchmesserebene des Ringes und nach einer Wendestelle etwa in dieser Ebene angeordnet sind. In der einen Position können sie also von dem Wind beaufschlagt werden und nach Erreichen der Wendestelle verdrehen sie sich so, daß der Wind auf die Schmalseite trifft, so daß dann ein demgemäß auf der gegenüberliegenden Seite des Ringes dem Wind ausgesetzter Flügel für eine Rückverdrehung des Ringes sorgt, der aufgrund der unterschiedlichen Zahnungen an seiner Innenprofilierung aus dieser Hin- und Hergewegung eine gleichgerichtete Drehbewegung macht, wie es vorstehend beschrieben wurde.

Insgesamt ergibt sich ein Umlaufrollengetriebe mit hohem Wirkungsgrad und kleinen Außenabmessungen, welches spielfrei und ruckfrei arbeitet und eine hohe Überdeckung zwischen Abwälzelement oder Rollenträger und den Ringen aufweist und vorteilhafte Ausgestaltungen mit wechselnden Drehzahlen und/oder Drehrichtungen an dem drehbaren Ring insbesondere auch aufgrund der Spielfreiheit erlaubt. Dabei können oszillierende Bewegungen eingeleitet und in eine Drehbewegung umgewandelt werden oder umgekehrt.

Nachstehend sind Ausführungsbeispiele der Erfindung anhand der Zeichnung näher beschrieben.

Es zeigt in zum Teil schematisierter Darstellung:
- Fig. 1: eine teilweise im Längsschnitt gehaltene Seitenansicht eines erfindungsgemäßen Umlaufrollengetriebes mit Antrieb, wobei ein mit Rollen bestückter Rollenträger und der von diesen Rollen beaufschlagte Teil der Ringe geschnitten dargestellt sind,
- Fig. 2: einen Teilquerschnitt des Getriebes gemäß der Schnittlinie A-A einerseits mit einer Stirnansicht eines Rollenträgers und andererseits mit einem Querschnitt des auf einem Durchmesser gegenüberliegenden zweiten Rollenträgers sowie mit einer Ansicht eines der beiden eine Innenprofilierung aufweisenden Ringes, der zwei in Umfangsrichtung gegeneinander versetzte Innenprofilierungen oder Innenverzahnungen hat, wobei eine Antriebswelle drehfest mit einem oder mehreren die Rollenträger aufweisenden Stegen verbunden ist,
- Fig. 3: eine der Fig. 1 entsprechende Darstellung eines abgewandelten Umlaufrollengetriebes, bei welchem die Antriebswelle einen eine Außenprofilierung oder Außenverzahnung aufweisenden zentralen Drehkörper als Antriebselement aufweist, der die Rollen des Rollenträgers auf der Seite beaufschlagt, die dem Angriff dieses Rollenträgers an den innenprofilierten Ringen gegenüberliegt,
- Fig. 4: einen Querschnitt des Umlaufrollengetriebes gemäß der Schnittlinie A-A in Fig. 3 mit zwei unterschiedlichen Schnittebenen,
- Fig. 5: einen Querschnitt eines umgewandelten Getriebes, welches derart bearbeitet ist, daß wenigstens einer der Ringe in Teilbereichen der gleichen Ebene unterschiedliche Profile und Teilverzahnungen hat und zwei von Druck- oder Zugkräften hin- und hergeführte Zahnstangen und je ein Arbeitszylinder an demdrehbaren Ring an einer Außenverzahnung angreifen,
- Fig. 6: einen Querschnitt eines Getriebes mit einem Profilring mit Teilverzahnungen, zwei auf eine Zahnstange und eine Außenverzahnung wirkenden Arbeitszylindern und einem mit dem Ring starr verbundenen Arm, der auf einem der Verzahnung gegenüberliegenden Durchmesser an dem Ring angreift,
- Fig. 7 u.Fig.8: ein Umlaufrollengetriebe mit einem Profilring mit Teilverzahnungen und wenigstens zwei einander an einem Durchmesser gegenüberliegenden starren Armen, die mit flächigen, in durch die Getriebeauslegung bestimmten Wendepunkten drehbar gelagerten Flügeln versehen sind, sowie
- Fig. 9: einen Längsschnitt eines Umlaufrollengetriebes gemäß Fig. 1 mit der Lagerung von Antrieb, Rollenträgern, Rollen und Abtrieb, wobei der eigentliche Antriebsmotor der besseren Übersicht wegen weggelassen ist.

Bei den nachfolgend beschriebenen Ausführungsbeispielen erhalten übereinstimmende Teile auch bei evtl. unterschiedlicher Gestaltung übereinstimmende Bezugszahlen.

Ein im ganzen mit 100 bezeichnetes Umlaufrollengetriebe, im folgenden auch kurz "Getriebe 100" genannt, hat zwei eine Innenprofilierung oder Innenverzahnung aufweisende Ringe 1 und 4. Die Innenprofilierung oder Innenverzahnung des ersten, feststehenden Ringes 1 ist mit 1.1 und 1.2 gekennzeichnet.

Der zweite Ring 4 ist parallel und koaxial zu dem ersten Ring 1 angeordnet und seine Innenprofilierungen sind mit 4.1 und 4.2 in der Zeichnung benannt.

Die Zähnezahl an der Innenprofilierung der beiden Ringe 1 und 4 ist verschieden. Dieses Umlaufrollengetriebe 100 weist ferner wenigstens ein, in den Ausführungsbeispielen zwei drehbare, an der profilierten Innenseite der Ringe 1 und 4 abrollbares Abwälzelement auf, welches in den Ausführungsbeispielen ein Rollenträger 5 ist, der weiter unten näher beschrieben wird. Dieses Abwälzelement 5 hat an seiner Außenseite abwechselnd Lücken und Vorsprünge, die in den noch zu erläuternden Ausführungsbespielen Rollen 3.1, 3.2, 3.3 und 3.4 in axial nebeneinanderliegenden Ebenen sind. Die Lücken zwischen diesen als Rollen ausgebildeten Vorsprünge sind die Abstände, die in Umfangsrichtung zwischen diesen Rollen bestehen. Diese Lücken und Vorsprünge kämmen mit den Innenproflierungen oder Innenverzahnungen 1.1, 1.2, 4.1 und 4.2 beider Ringe 1 und 4.

Das als Rollenträger 5 ausgebildete Abwälzelement ist drehbar an einem - im Ausführungsbeispiel zwei parallelen und beabstandeten - Stegen 5.1 und 5.2 drehbar gelagert und befindet sich zwischen diesen beiden Stegen 5.1 und 5.2. Diese Stege sind um eine in der Mitte oder dem Zentrum der Ringe 1 und 4 angeordnete Achse oder Welle 2 drehbar, wodurch das oder die Abwälzelemente beziehungsweise Rollenträger 5 in Umfangsrichtung entlang den Innenseiten der Ringe 1 und 4 mitgenommen werden, also an der Innenseite der Ringe abrollen, so daß aufgrund der unterschiedlichen Zähnezahlen an den Innenseiten der beiden Ringe der drehbare Ring 4 relativ zu dem feststehenden Ring 1 bewegbar ist.

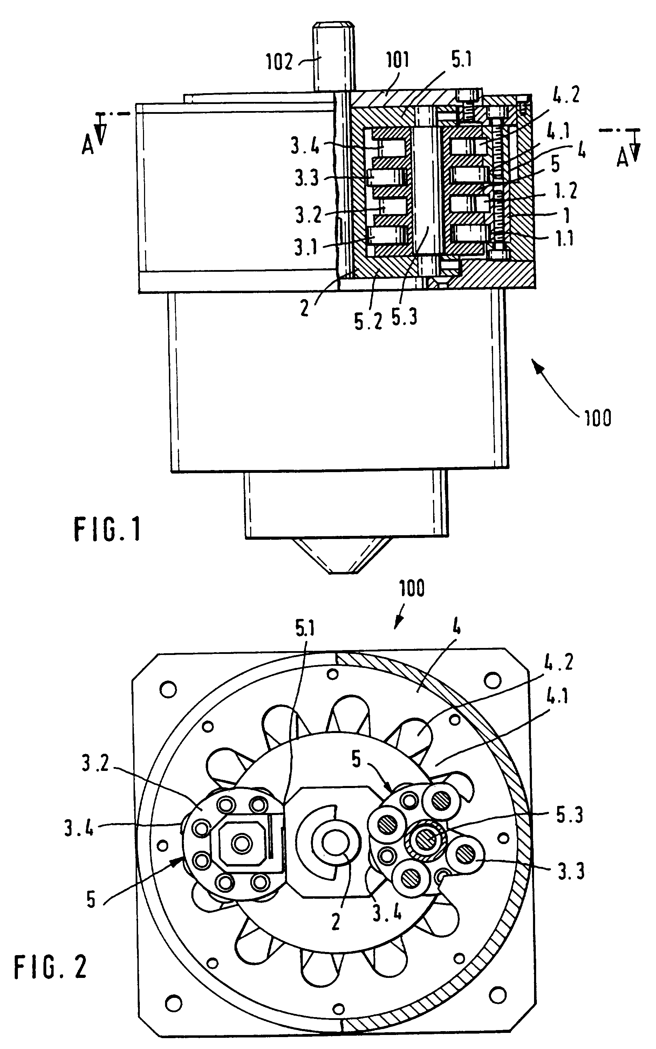

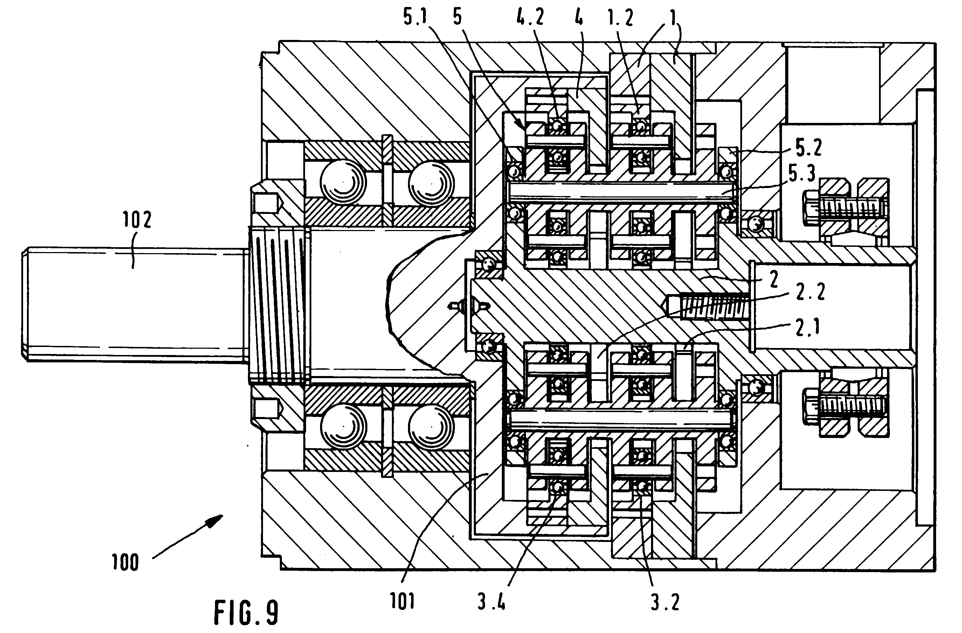

Vor allem beim Vergleich der Figuren 1 und 2 oder 3 und 4 sowie anhand der Fig. 9 ist erkennbar, daß jeder der beiden Ringe 1 und 4 im Ausführungsbeispiel zwei parallel zueinander in verschiedenen, axial nebeneinanderliegenden Ebenen angeordnete Innenprofilierungen 1.1 und 1.2 einerseits sowie 4.1 und 4.2 andererseits hat. Die Innenprofilierungen sind dabei als Innenverzahnungen gestaltet. Sie sind in Umfangsrichtung um einen Bruchteil der Profil- oder Zahnteilung, im Auführungsbeispiel um eine halbe Profil- oder Zahnteilung, in Umfangsrichtung gegeneinander versetzt oder verdreht angeordnet.

Dabei stimmen die Innenprofilierungen oder Innenverzahnungen eines Ringes sowohl bezüglich ihrer Form als auch der Zähnezahl überein. Die Innenprofilierungen oder Innenverzahnungen der beiden Ringe weichen aber insbesondere bezüglich der Zähnezahl voneinander ab, um die schon erwähnte Relativdrehung beim Umlauf des Abwälzelementes oder Rollenträger 5 und bei seinem Abrollen an diesen Profilierungen zu bewirken.

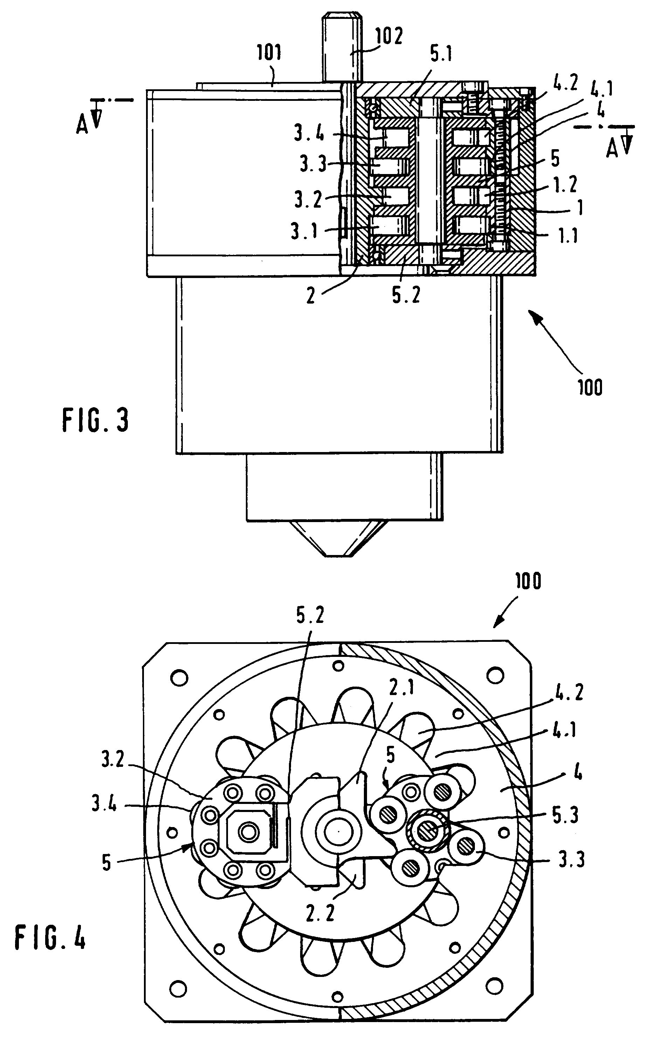

An dem Abwälzelement oder Rollenträger 5 sind der Anzahl der Innenprofilierungen oder Innenverzahnungen der Ringe 1 und 4 entsprechend viele axial nebeneinander angeordnete Gegenprofilierungen mit Lücken und Vorsprüngen, im Ausführungsbeispiel Rollensätze angeordnet. Anhand der Figuren 1, 3 und 9 wird deutlich, daß aufgrund der jeweils zwei Innenprofilierungen an den beiden Ringen also insgesamt vier axial nebeneinander angeordnete Gegenprofilierungen oder Rollensätze vorzusehen sind. Dabei sind diese Lücken und Vorsprünge jeweils dem Versatz der Innenprofilierungen oder Innenverzahnungen an den Ringen entsprechend in Umfangsrichtung gegeneinander versetzt. Dies führt dazu, daß gemäß Fig. 2 und 4 er an der einen Innenprofilierung oder Innenverzahnung eines Ringes angreifende Vorsprung - im Ausführungsbeispiel eine der Rollen - des Abwälzelementes oder Rollenträger 5 in Vorwärtsrichtung und der gleichzeitig in die benachbarte Innenprofilierung oder Innenverzahnung desselben Ringes eingreifende Vorsprung in entgegengesetzter Richtung anliegt und beim Abrollen des Abwälzelementes dieser Angriff seiner Vorsprünge kontinuierlich wechselt. In Fig. 2 und 4 sieht man Rollen 3.3 im Eingriff an einer Innenverzahnung 4.1 des drehbaren Ringes 4. Gleichzeitig erkennt man, daß die zweite Innenprofilierung 4.2 dieses Ringes 4 gegenüber der Innenprofilierung 4.1 um eine halbe Teilung in Umfangsrichtung versetzt ist, so daß die ihrerseits auf entsprechend versetzten Achsen sitzenden Rollen 3.4 an dieser Innenprofilierung 4.2 entsprechend angreifen und sich beim Umlauf des Rollenträgers 5 abwälzen können.

Das analoge geschieht an dem feststehenden Ring 1 und dessen Innensprofilierungen 1.1 und 1.2, die wiederum in zwei parallelen Ebenen angeorndet und gegeneinander versetzt sind und mit denen Rollen 3.1 und 3.2 in entsprechend versetzten Ebenen an dem Rollenträger 5 in der beschriebenen Weise zusammenwirken.

Das Abwälzelement ist also ein drehbar gelagerter Rollenträger 5, an dessen Umfang als Vorsprünge zum Eingriff in die Innenverzahnungen 1.1, 1.2 und 4.1, 4.2 der Ringe 1 und 4 jeweils einzelne drehbare Rollen 3.1, 3.2, 3.3 und 3.4 in entsprechend axial nebeneinander angeordneten Ebenen vorgesehen sind, wobei die einzelnen Rollen an dem Rollenträger 5 entsprechend dem Versatz der Innenprofilierungen oder Innenverzahnungen an den Ringen 1 und 4 ihrerseits in Umfangsrichtung an dem Rollenträger 5 versetzt und derart angeordnet sind, daß mit jeder Innenprofilierung oder Innenverzahnung der Ringe 1 und 4 jeweils passend angeordnete Rollen gleichzeitig zusammenwirken und gewissermaßen als Gegenzähne kämmen. Die an der einen Innenprofilierung eines Ringes angreifende Rolle greift dabei in Forwärtsrichtung und die gleichzeitig in die benachbarte Innenprofilierung desselben Ringes eingreifende Rolle in entgegengesetzter Richtung an dem jeweiliaen Zahn an, so daß zwangsweise Spielfreiheit gegeben ist, wobei sich bei der Drehung und dem Umlauf des Rollenträgers 5 eine Abwälzung ergibt, durch die der Angriff der Rollen kontinuierlich wechselt, weil diese an den Innenkonturen zwischen den Zähnen abrollen. In Fig. 2 und 4 erkennt man bei den mit der Innenprofilierung 4.1 zusammenwirkenden Rollen 3.3, daß eine dieser Rollen gerade den tiefsten Punkt zwischen zwei Zähnen erreicht hat, während die Nachbarrolle an der gegenüberliegenden Seite nahe der Zahnspitze angreift. Entsprechend versetzt sind die Rollen der nächsttieferen Ebene, die für die erwähnte zwangsweise Spielfreiheit sorgen. Die Innenprofilierung oder Innenverzahnung zwischen den einzelnen Zähnen hat also eine bogenförmige Kontur, die stetig in die Zahnflanken übergeht, so daß sich die Rollen bei dem Umlauf des Rollenträgers 5 kontinuierlich in dem Zwischenraum zwischen zwei Zähnen der Innenprofilierung des Ringes abrollen, wobei die jeweils gleichzeitig an den Innenverzahnungen oder Innenprofilierungen des jeweiligen Ringes 1 oder 4 angreifenden Rollen so in Umfangsrichtung versetzt sind, daß der Angriff jeweils zwangsweise spielfrei ist.

An dem oder den Rollenträgern 5 sind dabei für jede Innenprofilierung oder Innenverzahnung 1.1, 1.2 beziehungweise 4.1 und 4.2 vier Rollen 3.1 bis 3.4 gleichmäßig am Umfang verteilt vorgesehen, die in der schon erwähnten Weise versetzt sind, so daß also ein Rollenträger 5 im Ausführungsbeispiel insgesamt sechzehn Rollen aufweist. Gegebenenfalls könnten auch noch mehr als vier Rollen pro Rollensatz vorgesehen werden, z.B., wenn der Rollenträger 5 einen größeren Umfang haben soll und/oder größere Kräfte zu übertragen sind.

Gemäß Fig. 2, 4 und 9 sind an den Stegen 5.1 und 5.2. jeweils zwei einander auf einem Durchmesser gegenüberliegende, drehbar gelagerte Rollenträger 5 übereinstimmender Form und Größe vorgesehen. Dies ergibt eine günstige Kraftverteilung.

Es sind also an dem Rollenträger 5 insgesamt vier axial nebeneinanderliegende Rollensätze mit den Rollen 3.1, 3.2, 3.3 und 3.4 vorgesehen, bei denen jeweils die mit einer Innenprofilierung oder Innenverzahnung kämmenden Rollen gleichmäßig am Umfang verteilt sind, wobei die in Umfangsrichtung gegeneinander versetzten Rollen 3.1 und 3.2 einerseits zum Zusammenwirken mit dem Ring 1 und die Rollen 3.3 und 3.4 andererseits zum Zusammenwirken mit dem drehbaren Ring 4 vorgesehen sind. Dabei sind die Rollen 3.1 und 3.3 einerseits und die Rollen 3.2 und 3.4 andererseits jeweils koaxial zueinander angeordnet und haben zwischen sich einen übereinstimmenden Versatz in Umfangsrichtung des Rollenträgers 5. Somit ist die Spielfreiheit an beiden Ringen 1 und 4 zwangsweise gegeben.

Die Rollenträger 5, welche die Rollen 3.1 bis 3.4 aufweisen, drehen sich um eine durchgehende Achse 5.3, die an beiden Enden in den Stegen 5.1 und 5.2 fest eingebaut ist. Die die versetzten Rollen tragende Achse 5.3 ist also in axialer Richtung an dem Rollenträger 5 durchgehend vorgesehen und beidseits gelagert. Zwischen den einzelnen Rollen 3.1 bis 3.4 sind jeweils diese Rollen voneinander trennende und axial festlegende Stege an dem Rollenträger 5 vorgesehen. Dabei erkennt man in Fig. 9, daß die Rollen 3.1 bis 3.4 von den Außenringen von Wälzlagern gebildet werden, die ihrerseits auf entsprechenden Stiften gelagert sind, die parallel zur Achse 5.3 verlaufen und in den Stegen angeordnet sind.

Wird der drehbare Ring 4, in der Regel der Abtriebsring, mit mehr Profilen beziehungsweise Zähnen als der Ring 1 versehen oder ausgebildet, wird durch einen Umlauf des Rollenträgers 5 entlang der Innenseite des Ringes 1 eine unvollständige Umdrehung dieses Ringes 4, z.B. des Abtriebsringes, durchgeführt und zwar beträgt die Differenz der Anzahl der Profile oder Zähne.

Wird der Ring 4 beispielsweise mit weniger Zähnen oder Profilen, z.B. mit zwei Zähnen weniger als der feststehende Ring 1 ausgebildet, eilt er bei einem Umlauf des Rollenträgers 5 gegenüber dem feststehenden Ring 1 voraus.

Werden der Ring 4 und der Ring 1 jeweils mit einer gleichen Anzahl von identischen Profilierungen oder Verzahnungen und Zähnezahlen ausgebildet, ergibt sich zwischen den beiden Ringen 1 und 4 keine Relativbewegung. Der Abtriebsring 4 rastet also gewissermaßen für den Bereich, in dem Profilgleichheit zu dem festen Ring 1 besteht, ein. Bildet man nun am Abtriebsring 4 einen Teilbereich des Innenumfanges mit einer Profilierung aus, welche identisch mit der eines übereinstimmenden Bereiches des festen Ringes 1 ist, z.B. für einen Betrieb mit zwei Rollenträgern 5 gemäß Fig. 1 jeweils sich über 90° oder ein Viertel des Umfanges erstreckende Bereich, und versieht die restlichen gegenüberliegenden Bereiche von ebenfalls etwa einem Viertel des Umfanges oder 90° mit mehr Zähnen an dem drehbaren oder Abtriebsring 4, entsteht eine Schrittbewegung, deren Drehsinn von der Anzahl der Zähne bestimmt wird. Sind die Zähnezahlen des drehbaren Ringes in dem Bereich, in dem sie von der des festen Ringes 1 abweicht, geringer, ergibt sich eine entsprechende Rückwärtsdrehung.

Die Übergänge zwischen der erwähnten Rastphase und der Bewegungsphase können mit an sich bekannten Übertragungsfunktionen so gestaltet und ausgebildet werden, daß sie z.B. über einen Bereich von 15° der Beschleunigungs- und/oder Geschwindigkeitskoeffizient von Null auf ein Maximum und wieder zu Null geändert werden. Somit kann bei einem Umlauf der Rollenträger 5 eine Hin- und Her-Drehbewegung an dem Abtriebsring 4 erzeugt werden, wenn ein Bereich mehr und ein anderer Bereich weniger Zähne als der entsprechende Bereich des feststehenden Ringes 1 aufweist.

Für eine am Antrieb beziehungsweise der Welle 2 eingeleitete kontinuierliche Antriebsbewegung erhält man somit an dem Ring 4 eine Start-Stopp-Vorwärts- und/oder Rückwärtsbewegung oder eine oszillierende Bewegung.

Dabei kann der drehbar gelagerte Ring 4 über eine mit seiner Stirnseite (Fig. 1) oder mit seiner Außenseite verbundenen Scheibe 101, die gegebenenfalls topf- oder glockenartig gestaltet sein kann, mit einer in Flucht mit der Antriebswelle 2 angeordneten Abtriebswelle 102 verbunden sein. Man erkennt diese Anordnung mit einer solchen Scheibe 101 zur Übertragung der Rotationsbewegungen des Ringes 4 in Fig. 1, 3 und 9.

Aus der vorangehenden Beschreibung ergibt sich, daß zwischen der Welle 2 und der Welle 102 ein erheblicher Drehzahlunterschied besteht, d.h., die sehr hohe Drehzahl der Welle 2 wird durch das Getriebe 101 an der Welle 102 stark untersetzt. Für eine Übersetzung zur Erhöhung der Drehzahl könnte nun Antrieb und Abtrieb auch vertauscht sein, d.h. die Welle 102 könnte mit einem Antrieb gekuppelt sein, so daß dann an der Welle 2 ein Abtrieb angeschlossen ist. In diesem Falle könnte aus einer vorgegebenen Drehzahl eine erheblich höhere Drehzahl gemacht werden. Dies ist deshalb möglich, weil das Getriebe aufgrund der vorbeschriebenen Merkmale und Maßnahmen leichtgängig und spielfrei arbeitet und einen hohen Wirkungsgrad ohne Selbsthemmung hat. Dabei ist auch vorteilhaft, daß die Rollenträger 5 und die innenprofilierten Ringe 1 und 4 jeweils axial nebeneinanderliegende und in Umfangsrichtung versetzte Profilebenen haben und an jedem Ring 1 und 4 jeweils in jeder Rollenebene mindestens eine Rolle, also an einem Ring mindestens zwei Rollen gleichzeitig im Eingriff sind und einen momentanen Formschluß bilden.

Die mit dem oder den Rollenträger 5 drehbare Welle 2 weist gemäß Fig. 4 eine Außenprofilierung auf oder trägt eine solche in Form eines Stern- oder Zahnrades mit Profilen 2.1 und 2.2, die in entsprechenden Ebenen versetzt sind und jeweils mit einer Rolle 3.1 bis 3.4 einen momentanen Formschluß bilden. Die Ausführungform nach Fig. 3 und 4 eignet sich somit, in dem Getriebe 100 eine weitere Über- oder Untersetzung einzubauen.

Dabei ist in Fig. 3 und 4 erkennbar, daß die Rollenträger 5 auf ihrer den Ringen 1 und 4 und deren Innenprofilierung gegenüberliegenden Seite im Zentrum der Ringe mit einem die Außenprofilierung 2.1 und 2.2 usw. aufweisenden Drehkörper kämmen, der mit der Antriebswelle drehfest oder gegebenenfalls einstückig verbunden ist. Er weist die schon erwähnten mehreren parallelen Zahnkränze auf, deren in axialer Richtung in nebeneinander angeorndeten Ebenen befindlichen Zähne in Umfangsrichtung um den Betrag gegeneinander versetzt sind, um den die einzelnen Rollen 3.1 bis 3.4 und die Zähne der Innenprofilierung der Ringe 1 und 4 in Umfangsrichtung versetzt sind, so daß sich auch an dieser Außenprofilierung 2.1, 2.2 usw. dieselben Eingriffsverhältnisse und Überdeckungen der Rollen des Rollenkörpers 5 ergeben.

Es wurde schon erwähnt, daß die Zahl der Zähne und/oder die Form der Zähne in Umfangsrichtung wenigstens eines der beiden Ringe 1 oder 4 und/oder des zentralen Drehkörpers über einen Teil des Umfanges wechseln kann, so daß in einem Abschnitt des Umfanges mehr und/oder anders geformte Zähne als in einem anderen oder mehreren anderen Abschnitten angeordnet sind. Mit entsprechenden Übergangsbereichen führt dies zu den schon beschriebenen unterschiedlichen Drehbewegungen am Abtrieb, wodurch das Getriebe 100 als Schrittschaltgetriebe benutzt werden kann.

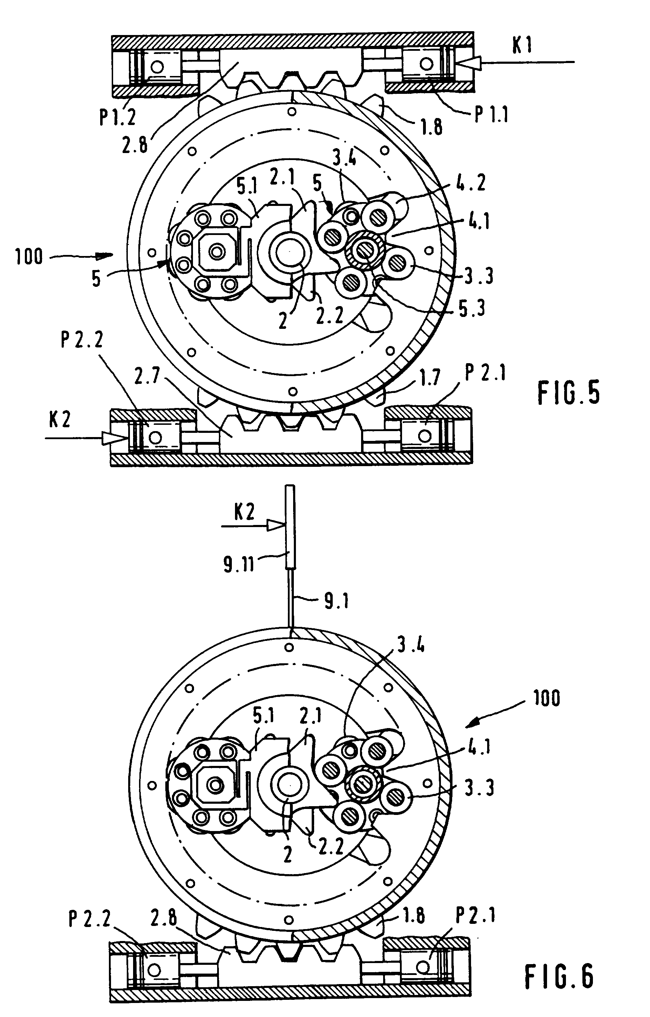

Aufgrund des hohen Wirkungsgrades des Getriebes 100 sind Ausgestaltungen möglich, die dazu benutzt werden können, um gemäß Fig. 5 eine oszillierende Bewegung mittels der Kräfte K1 und K2 über die Kolben P1 und P2 einzuleiten. Diese Kolben gehören zur Arbeitszylindern, die in Fig. 5 und auch in Fig. 6 schematisiert dargestellt sind. Dabei erkennt man, daß an dem drehbaren Ring 4 außenseitig ein Antrieb und/oder Abtrieb ankuppelbar ist, der gemäß Fig. 5 aus zwei Zahnsegmenten mit Zähnen 1.7 und 1.8 am Außenumfang des Ringes 4 bestehen kann, mit denen die Zahnstangen 2.8 kämmen. Denkbar wäre hier aber auch der Angriff eines Zahnrades und ein am Umfang umlaufender Zahnkranz, wodurch das gesamte Getriebe 100 als Stufe in einem Getriebe eingesetzt werden könnte.

Unter der Einwirkung der Kräfte K1 und K2 erhält man über die Zahnstangen 2.8 und die Verzahnungen 1.7 und 1.8 an der Welle 2 eine Drehbewegung. Dabei ist vorgesehen, daß die Profilierung oder Verzahnung der Ringe 1 und 4 und/oder des zentralen Drehkörpers in Umfangsrichtung wechselnde Zähnezahlen haben, so daß in der schon vorbeschriebenen Weise der drehbare Ring eine oszillierende Bewegung durchführt, wenn die Welle 2 eine gleichförmige Drehbewegung macht. Wird nun dieses Prinzip umgekehrt und der Ring 4 oszillierend angetrieben, können die Hin- und Herbewegungen also in eine Drehbewegung umgewandelt werden.

In Fig. 6 greift am Außenumfang des Ringes 4 ein Hebelarm 9.1 und außerdem die Verzahnung 1.8 und eine Zahnstange 2.8 an. Die Kraft K2 wird dabei an einem Flügel 9.11 über den Hebelarm 9.1 auf den drehbaren Ring 4 des Getriebes 100 übertragen. Die Kraft K2 kann eine Strömungskraft z.B. Windkraft sein und bei einem verdrehbaren Flügel dazu ausgenutzt werden, Hin- und Herbewegungen an dem Ring 4 in eine Drehbewegung an der Welle 2 umzuwandeln.

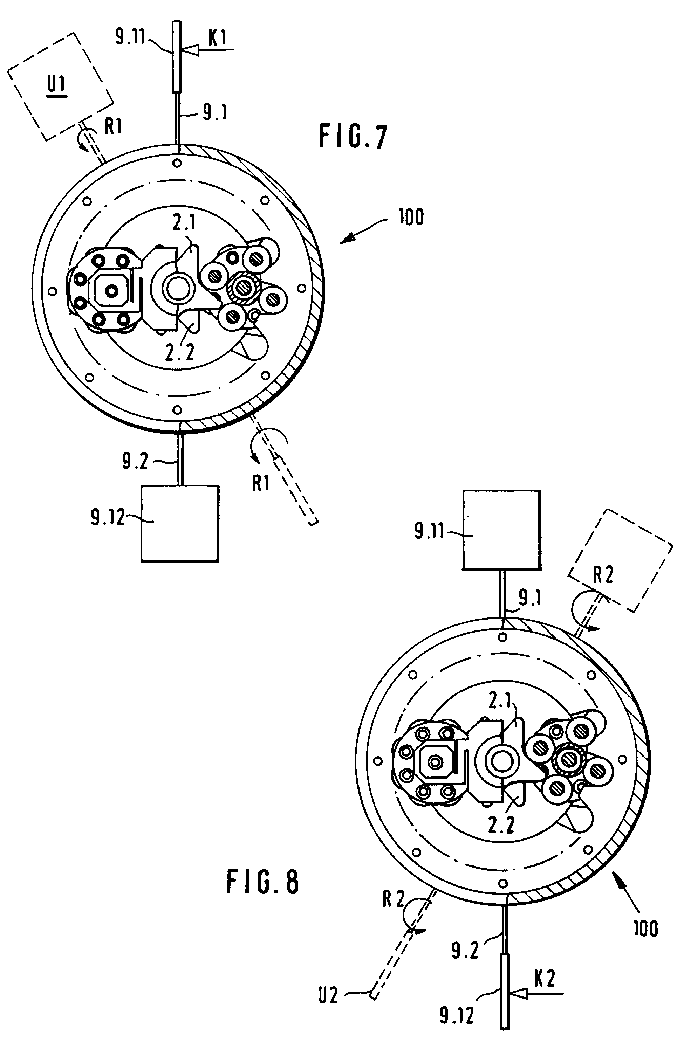

Im Ausführungsbeispiel gemäß den Figuren 7 und 8 sind jeweils auf einem Durchmesser einander gegenüberliegend Hebelarme 9.1 und 9.2 mit Flügeln 9.11 und 9.12 vorgesehen. Die Flügel sind um eine auf einem Durchmesser oder dessen Verlängerung liegenden Achse drehbar gelagert, so daß sie in der einen Richtung mit ihrer Fläche quer zur Durchmesserebene des Ringes 4 und nach einer Wendestelle etwa in dieser Ebene angeorndet sind. Dies führt bei einer gleichmäßigen Kraftbeaufschlagung zu einer oszillierenden Bewegung des Ringes 4, die aufgrund der geschilderten Profilierungen an den Innenzahnkränzen im Zusammenwirken mit den Rollen des Rollenträgers 5 zu einer gleichgerichteten Drehbewegung an der Welle 2 führen. Die flächenartigen Flügel 9.11 und 9.12 werden so ausgebildet, daß in den Wendepunkten oder Umkehrstellungen eine Arretierung R1 gelöst wird, wodurch die Flügel 9.11 und 9.12 um 90° gedreht werden, wie es in den Figuren 7 und 8 angedeutet ist. Bei gleicher Windrichtung entsteht dadurch die Bewegungsumkehr am Antrieb und somit eine gleichsinnige Drehbewegung an dem entsprechenden Abtrieb.

Da das Getriebe 100 durch die an der Innenseite seiner Ringe 1 und 4 gegegeneinander versetzt angeordneten Innenprofilierungen und die damit zusammenwirkenden Rollen des Rollenträgers 5 zwangsläufig spielfrei ist, können solche oszillierenden Bewegungen zu entsprechenden Schaltbewegungen oder aber zum Umwandeln von Hin- und Herbewegungen in Drehbewegungen mit gutem Wirkungsgrad ausgenutzt werden. Gleichzeitig ist eine hohe Überdeckung zwischen den übertragenden Elementen, also den Rollen und Ringen bei insgesamt realtv kleiner radialer Abmessung möglich, so daß eine kompakte Bauweise erzielt werden kann.

Das Umlaufrollengetriebe 100 hat zwei mit Innenprofilierung versehene Ringe 1 und 4, wovon ein Ring 1 feststeht und der andere Ring 4 parallel oder koaxial zu dem ersten Ring 1 angeordnet und relativ zu diesem drehbar gelagert ist und die Zähnezahlen der beiden Ringe verschieden sind. Dabei hat jeder der beiden Ringe 1 und 4 wenigstens zwei parallel zueinander angeordnete Innenprofilierungen 1.1, 1.2, 4.1 und 4.2, die in Umfangsrichtung um einen Bruchteil der Profil- oder Zahnteilung, bei zwei gegeneinander versetzten Innenprofilierungen um die halbe Zahnteilung gegeneinander versetzt angeordnet sind, so daß in diesem Fall jeweils im Bereich der Lücke einer Verzahnung der Zahn der benachbarten zweiten Verzahnung steht. Dies führt zu einer hohen Überdeckung mit den entsprechenden Gegenprofilierungen eines Abwälzelementes, bevorzugt eines Rollenträger 5 mit drehbaren Rollen, die jeweils in den Lücken zwischen den Zähnen der Innenprofilierungen abrollen und aufgrund der unteschiedlichen Zähnezahlen der beiden Ringe zu einer Relativverdrehung bei einem Umlauf des Abwälzkörpers führen. Werden dabei in Umfangsrichtung Abschnitte unterschiedlicher Zähnezahlen und/oder Zahnformen vorgesehen, kann die Abtriebsdrehzahl variiert, gegebenenfalls der Abtrieb sogar kurzzeitig stillgesetzt oder in seiner Drehrichtung umgekehrt werden, was wiederum dazu ausgenutzt werden kann, eine hin- und hergehende Bewegung, die an einem so gestalteten Ring angreift, über das Getriebe 100 in eine gleichgerichtete Drehbewegung umzuwandeln.

## Patentansprüche

1. Umlaufrollengetriebe (100) mit zwei eine Innenprofilierung oder Innenverzahnung aufweisenden Ringen (1,4), wobei ein erster Ring (1) feststeht und ein zweiter Ring (4) parallel oder koaxial zu dem ersten Ring (1) angeordnet und relativ zu diesem drehbar gelagert ist und die Zähnezahl an der Innenprofilierung der beiden Ringe (1, 4) verschieden ist, mit wenigstens einem drehbaren, an der profilierten Innenseite der Ringe (1, 4) abrollbaren Abwälzelement (5), welches an seiner Außenseite abwechselnd Lücken und Vorsprünge hat, die mit den Innenprofilierungen oder Innenverzahnungen beider Ringe kämmen, wobei das Abwälzelement an einem Steg (5.1, 5.2) oder dergleichen drehbar gelagert ist, welcher Steg oder dergleichen um eine in der Mitte der Ringe (1,4) angeordnete Achse oder Welle (2) drehbar ist und dadurch das Abwälzelement in Umfangsrichtung entlang den Innenseiten der Ringe (1, 4) mitnimmt, so daß aufgrund der unterschiedlichen Zähnezahlen an der Innenseite der beiden Ringe der drehbare Ring (4) relativ zu dem feststehenden Ring (1) bewegbar ist, **dadurch gekennzeichnet**, daß jeder der beiden Ringe (1, 4) wenigstens zwei parallel zueinander angeordnete Innenprofilierungen (1.1, 1.2; 4.1,, 4.2) oder Innenverzahnungen hat, die in Umfangsrichtung um einen Bruchteil der Profil- oder Zahnteilung gegeneinander verdreht oder versetzt angeordnet sind, wobei die Innenprofilierungen oder Innenverzahnungen eines Ringes übereinstimmen, die Innenprofilierungen oder Innenverzahnungen der beiden Ringe aber voneinander verschieden sind, daß an dem Abwälzelement der Anzahl der Innenprofilierungen oder Innenverzahnungen der Ringe (1,4) entsprechend viele axial nebeneinander angeordnete Gegenprofilierung mit Lücken und Vorsprüngen angeordnet sind, die dem Versatz der Innenprofilierungen oder Innenverzahnungen an den Ringen entsprechend in Umfangsrichtung gegeneinander versetzt sind, und daß der an der einen Innenprofilierung oder Innenverzahnung eines Ringes angreifende Vorsprung des Abwälzelementes in Vorwärtsrichtung und der gleichzeitig in die benachbarte Innenprofilierung oder Innenverzahnung desselben Ringes eingreifende Vorsprung in entgegengesetzter Richtung anliegt und beim Abrollen des Abwälzelementes dieser Angriff seiner Vorsprünge kontinuierlich wechselt.

2. Umlaufrollengetriebe nach Anspruch 1, dadurch gekennzeichnet, daß bei Verwendung von zwei Ringen mit jeweils zwei parallel zueinander angeordneten Innenprofilierungen oder Innenverzahnungen diese um eine halbe Profil- oder Zahnteilung gegeneinander in Umfangsrichtung versetzt angeordnet sind.

3. Umlaufrollengetriebe nach Anspruch 1 oder 2, dadurch gekennzeichnet, daß das Abwälzelement ein drehbar gelagerter Rollenträger (5) ist, an dessen Umfang als Vorsprünge zum Eingriff in die Innenverzahnungen der Ringe (1, 4) jeweils einzelne drehbare Rollen vorgesehen sind, daß die einzelnen Rollen an dem Rollenträger (5) entsprechend dem Versatz der Innenprofilierungen oder Innenverzahnungen an den Ringen (1, 4) ihrerseits in Umfangsrichtung an dem Rollenträger (5) versetzt und derart angeordnet sind, daß mit jeder Innenprofilierung oder Innenverzahnung der Ringe (1, 4) jeweils passend angeordnete Rollen zusammenwirken oder kämmen, und daß die an der einen Innenprofilierung oder Innenverzahnung eines Ringes angreifende Rolle in Vorwärtsrichtung und die gleichzeitig in die benachbarte Innenprofilierung oder Innenverzahnung desselben Ringes eingreifende Rolle in entgegengesetzter Richtung anliegt und sich bei der Drehung und dem Umlauf des Rollenträgers (5) so abwälzen, daß dieser Angriff der Rollen (3.1 bis 3.4) kontinuierlich wechselt.

4. Umlaufrollengetriebe nach einem der Ansprüche 1 bis 3, dadurch gekennzeichnet, daß die Innenprofilierung oder Innenverzahnung zwischen den einzelnen Zähnen eine bogenförmige Kontur hat, die stetig in die Zahnflanken übergeht, und daß sich die Rollen (3.1 bis 3.4) bei dem Umlauf des Rollenträgers (5) kontinuierlich in dem Zwischenraum zwischen zwei Zähnen der Innenprofilierung des Ringes abrollen.

5. Umlaufrollengetriebe nach einem der Ansprüche 1 bis 4, dadurch gekennzeichnet, daß die jeweils gleichzeitig an den Innenverzahnungen oder Innenprofilierungen des jeweiligen Ringes angreifenden Vorsprünge oder Rollen so versetzt sind, daß der Angriff des Abwälzelementes oder Rollenträgers an dem jeweiligen Ring zwangsweise spielfrei ist.

6. Umlaufrollengetriebe nach einem der Ansprüche 1 bis 5, dadurch gekennzeichnet, daß an dem Rollenträger für jede Innenprofilierung oder Innenverzahnung wenigstens zwei, drei, vier oder mehr Vorsprünge oder Rollen gleichmäßig am Umfang verteilt vorgesehen sind und der Rollenträger somit insgesamt wenigstens acht, zwölf oder sechzehn Rollen aufweist.

7. Umlaufrollengetriebe nach einem der Ansprüche 1 bis 6, dadurch gekennzeichnet, daß an dem Steg wenigstens zwei einander vorzugsweise auf einem Durchmesser gegenüberliegende, drehbar gelagerte Rollenträger übereinstimmender Form und Größe oder drei am Innenumfang der Ringe gleichmäßig verteilte Rollenträger vorgesehen sind.

8. Umlaufrollengetriebe nach einem der Ansprüche 1 bis 7, dadurch gekennzeichnet, daß an dem Rollenträger insgesamt vier axial nebeneinanderliegende Rollensätze vorgesehen sind, bei denen jeweils die mit einer Innenprofilierung oder Innenverzahnung kämmenden Rollen gleichmäßig am Umfang verteilt sind, wobei die in Umfangsrichtung gegeneinander versetzten Rollen zum Zusammenwirken mit dem einen Ring und die zum Zusammenwirken mit dem anderen Ring jeweils koaxial zueinander angeordnet sind beziehungsweise einen übereinstimmenden Versatz in Umfangsrichtung des Rollenträgers haben.

9. Umlaufrollengetriebe nach einem der Ansprüche 1 bis 8,. dadurch gekennzeichnet, daß die an einer übereinstimmenden Stelle des Umfanges des Rollenträgers angeordneten Rollen zum Zusammenwirken mit jeweils einer Innenprofilierung oder Innenverzahnung der beiden Ringe auf einer durchgehenden Achse angeordnet sind und daß alle die in Umfangsrichtung gegeneinander versetzten Rollen tragenden Achsen in axialer Richtung an dem Rollenträger durchgehend vorgesehen sind, wobei jede zweite Achse jeweils versetzt die entsprechenden Rollen trägt.

10. Umlaufrollengetriebe nach einem der Ansprüche 1 bis 9, dadurch gekennzeichnet, daß der drehbar gelagerte Ring über eine insbesondere mit seiner Stirnseite und/oder Außenseite verbundene Scheibe (101) oder Glocke mit einer in Flucht mit der Antriebswelle (2) angeordneten Abtriebswelle (102) verbunden ist.

11. Umlaufrollengetriebe nach einem der Ansprüche 1 bis 10, dadurch gekennzeichnet, daß für eine Übersetzung zur Erhöhung der Drehzahl Antrieb und Abtrieb vertauscht sind.

12. Umlaufrollengetriebe nach einem der vorstehenden Ansprüche, mit zwei innenprofilierten Ringen (1, 4), einer Welle (2) und einem mit Rollelementen oder Rollen bestückten, mit der Welle (2) verbundenen Rollenträger (5), dadurch gekennzeichnet, daß die innenprofilierten Ringe (1, 4) jeweils mindestens zwei einander benachbarte Profilebenen und der Rollenträger (5) mindestens vier, um die Welle (2) drehbare Rollebenen aufweist und daß die Profile (1.1, 1.2; 4.1, 4.2) der Ringe (1, 4) derart bearbeitet sind, daß sie mit jeweils mindestens einer Rolle (3.1, 3.2, 3.3, 3.4) der Rollenebene, welche nicht weniger als zwei Rollen pro Ebene aufweisen, einen momentanen Formschluß bilden.

13. Umlaufrollengetriebe nach einem der Ansprüche 1 bis 12, dadurch gekennzeichnet, daß die mit dem oder den Rollenträgern (5) drehbare Welle (2) Außenprofilierungen aufweist oder trägt, welche derart bearbeitet sind, daß sie mit je einer Rolle des Rollenträgers stets mindestens in zwei Rollenebenen einen momentanen Formschluß bilden.

14. Umlaufrollengetriebe nach einem der Ansprüche 1 bis 13, dadurch gekennzeichnet, daß der oder die Rollenträger (5) auf ihrer den Ringen (1, 4) und deren Innenprofilierung gegenüberliegenden Seite mit einem eine Außenprofilierung aufweisenden Drehkörper, insbesondere einem eine Verzahnung aufweisenden Drehkörper kämmen, daß der Drehkörper mit der Antriebswelle (2) drehfest oder einstückig verbunden ist und daß er mehrere parallele Zahnkränze aufweist, deren in axialer Richtung nebeneinander angeordnete Zähne in Umfangsrichtung um den Betrag gegeneinander versetzt sind, um den die einzelnen Rollen (3.1 bis 3.4) und die Zähne der Innenprofilierung der Ringe (1,4) in Umfangsrichtung versetzt sind.

15. Umlaufrollengetriebe insbesondere nach einem der vorstehenden Ansprüche, dadurch gekennzeichnet, daß die Zahl der Zähne und/oder die Form der Zähne in Umfangsrichtung wenigstens eines der beiden Ringe (1, 4) und/oder des zentralen Drehkörpers über einen Teil des Umfanges wechselt, so daß in einem Abschnitt des Umfanges mehr und/oder anders geformte Zähne als in einem oder mehreren anderen Abschnitten angeordnet sind.

16. Umlaufrollengetriebe nach einem der Ansprüche 1 bis 15, dadurch gekennzeichnet, daß die Zähne in den in axialer Richtung einander benachbarten Ebenen an dem zentralen Drehkörper und/oder den Ringen derart bearbeitet sind, daß sie in Teilbereichen der gleichen Ebene unterschiedliche Profile aufweisen.

17. Umlaufrollengetriebe nach einem der Ansprüche 1 bis 16, dadurch gekennzeichnet, daß die Profilierung oder Verzahnung der Ringe und/oder des zentralen Drehkörpers derart ausgebildet sind, daß die Ringe und/oder der Drehkörper in bestimmten Umfangs- oder Winkelbereichen unterschiedlicher Ebenen gleiche Profile oder Formen und/oder Abstände aufweisen.

18. Umlaufrollengetriebe nach einem der Ansprüche 1 bis 17, dadurch gekennzeichnet, daß für die drehbare Lagerung des Rollenträgers an dem Steg wenigstens eine Welle (5.3) oder Achse vorgesehen ist.

19. Umlaufrollengetriebe nach einem der Ansprüche 1 bis 18 dadurch gekennzeichnet, daß zwischen Umfangsbereichen der Ringe und/oder des zentralen Drehkörpers mit unterschiedlichen Zähnezahlen und/oder Zahnformen die Zähne und deren Abstand eine einen stoßfreien Übergang der relativen Drehung ermöglichende Form haben, indem die Übertragungsfunktion der Übergänge zwischen den unterschiedlichen Profilen der jeweils gleichen Ebene mindestens in der ersten Ableitung den Wert unterschiedlich von Null beziehungsweise Stoßfreiheit aufweisen.

20. Umlaufrollengetriebe nach einem der Ansprüche 1 bis 19, dadurch gekennzeichnet, daß an dem drehbaren Ring (4) außenseitig ein Antrieb und/oder Abtrieb angekuppelt ist.

21. Umlaufrollengetriebe nach einem dr Ansprüche 1 bis 20, dadurch gekennzeichnet, daß an der Außenseite des drehbaren (4) Ringes insbesondere an seinem Außenumfang, ein Hebelarm (9.1) für einen Kraftangriff und/oder eine Verzahnung oder Teilverzahnung zum Zusammenwirken mit einer Gegenverzahnung an einem Zahnrad oder einer Zahnstange oder dergleichen angeordnet sind.

22. Umlaufrollengetriebe nach einem der Ansprüche 1 bis 21, dadurch gekennzeichnet, daß zum Angriff an der Außenverzahnung des drehbaren Ringes und einer damit kämmenden Zahnstange oder dergleichen ein oder zwei Arbeitszylinder oder dergleichen vorgesehen sind.

23. Umlaufrollengetriebe nach einem der Ansprüche 1 bis 22, dadurch gekennzeichnet, daß an einem, zwei oder mehreren mit dem drehbaren Ring starr verbundenen Hebelarmen um eine etwa auf einem Radius zu dem Ring angeordnete Achse drehbar gelagerte Flügel vorgesehen sind, die in der einen Richtung mit ihrer Fläche quer zur Durchmesserebene des Ringes (4) und nach einer Wendestelle etwa in dieser Ebene angeordnet sind.

## Claims

1. An epicyclic roller gear (100) with two rings (1, 4) having an internal profile or internal tooth system, wherein a first ring (1) is fixed and a second ring (4) is parallel or coaxial to the first ring (1) and is rotatably mounted with respect thereto and the number of teeth on the internal profile of the two rings (1, 4) is different, further with at least one rotatable rolling element (5) which is capable of rolling on the profiled inner side of the rings (1, 4) and has alternate external gaps and projections which mesh with the internal profiles or internal tooth systems of both rings, wherein the rolling element is rotatably mounted on an arm (5.1, 5.2) or the like which is rotatable about an axis or a shaft (2) arranged in the centre of the rings (1, 4) and thereby drives the rolling element in the circumferential direction along the inner sides of the rings (1, 4), so that on account of the different numbers of teeth on the inner side of the two rings (1, 4) the rotatable ring (4) is movable relative to the fixed ring (1), **characterized in that** each of the two rings (1, 4) has at least two internal profiles (1.1, 1.2; 4.1, 4.2) or internal tooth systems which are disposed parallel to each other and are arranged so as to be mutually twisted or offset in the circumferential direction by a fraction of the pitch of the profile or teeth, wherein the internal profiles or internal tooth systems of one ring conform, but the internal profiles or internal tooth systems of the two rings differ from one another, that axially adjacent, complementary profiles with gaps and projections are arranged on the rolling element and correspond in number to the internal profiles or internal tooth systems of the rings (1, 4), said complementary profiles being mutually offset in the circumferential direction according to the offset of the internal profiles or internal tooth systems on the rings, and that the projection of the rolling element engaging the one internal profile or internal tooth system of a ring is applied in the forward direction and the projection simultaneously engaging the adjacent internal profile or internal tooth system of the same ring is applied in the opposite direction and as the rolling element rolls this engagement of the projections thereof alternates continuously.

2. An epicyclic roller gear as claimed in claim 1, characterized in that when using two rings each having two internal profiles or internal tooth systems arranged parallel to each other, the latter are mutually offset in the circumferential direction by half the pitch of the profile or teeth.

3. An epicyclic roller gear as claimed in claim 1 or claim 2, characterized in that the rolling element is a rotatably mounted roller carrier (5) circumferentially provided with individual rotatable rollers as projections for engagement with the internal tooth systems of the rings (1, 4), that the individual rollers on the roller carrier (5) are offset in the circumferential direction on the roller carrier (5) according to the offset of the internal profiles or internal tooth systems on the rings (1, 4) and are arranged in such a way that suitably arranged rollers co-operate or mesh with each internal profile or internal tooth system of the rings (1, 4), and that the roller engaging the one internal profile or internal tooth system of a ring is applied in the forward direction and the roller simultaneously engaging the adjacent internal profile or internal tooth system of the same ring is applied in the opposite direction and as the roller carrier (5) rotates and revolves they move in rolling contact in such a way that this engagement of the rollers (3.1 to 3.4) alternates continuously.

4. An epicyclic roller gear as claimed in any one of claims 1 to 3, characterized in that the internal profile or internal tooth system between the individual teeth has an arcuate contour with a smooth transition to the tooth surfaces, and during the revolution of the roller carrier (5) the rollers (3.1 to 3.4) roll continuously in the space between two teeth of the internal profile of the ring.

5. An epicyclic roller gear as claimed in any one of claims 1 to 4, characterized in that the projections or rollers simultaneously engaging the internal tooth systems or internal profiles of the respective ring are offset in such a way that the engagement of the rolling element or roller carrier with the respective ring is compulsorily free from backlash.

6. An epicyclic roller gear as claimed in any one of claims 1 to 5, characterized in that the roller carrier may be provided with at least two, three or four or more equi-circumferential projections or rollers for each internal profile or internal tooth system and the roller carrier therefore has altogether at least eight, twelve or sixteen rollers.

7. An epicyclic roller gear as claimed in any one of claims 1 to 6, characterized in that the arm is provided with at least two, preferably diametrally opposed, rotatably mounted roller carriers of identical size and shape or three roller carriers evenly distributed at the inner circumference of the rings.

8. An epicyclic roller gear as claimed in any one of claims 1 to 7, characterized in that the roller carrier is provided with altogether four axially adjacent sets of rollers, wherein the rollers meshing with an internal profile or internal tooth system are equicircumferential, the rollers mutually offset in the circumferential direction for co-operating with the one ring and those for co-operating with the other ring in each case being arranged coaxially and having a corresponding offset in the circumferential direction of the roller carrier.

9. An epicyclic roller gear as claimed in any one of claims 1 to 8, characterized in that the rollers which are arranged at a corresponding location on the circumference of the roller carrier and serve for co-operating with in each case one internal profile or internal tooth system of the two rings are arranged on a continuous axis and that all the axes carrying the rollers mutually offset in the circumferential direction may be provided continuously in the axial direction on the roller carrier, each second axis carrying the respective rollers offset.

10. An epicyclic roller gear as claimed in any one of claims 1 to 9, characterized in that the rotatably mounted ring is connected to an output shaft (102) arranged in alignment with the input shaft (2), such connection being established by way of a disc (101) or bell, particularly one connected to the end face and/or exterior of said ring.

11. An epicyclic roller gear as claimed in any one of claims 1 to 10, characterized in that drive and output are interchanged to increase the speed.

12. An epicyclic roller gear as claimed in any one of the preceding claims, with two internally profiled rings (1, 4), a shaft (2) and connected thereto a roller carrier (5) fitted with rolling elements or rollers, characterized in that the internally profiled rings (1, 4) in each case have at least two adjacent profile planes and the roller carrier (5) has at least four roller planes rotatable about the shaft (2) and that the profiles (1.1, 1.2; 4.1, 4.2) of the rings (1, 4) are formed so as to produce a momentary form-fit with in each case at least one roller (3.1, 3.2, 3.3, 3.4) of the roller plane having no less than two rollers per plane.

13. An epicyclic roller gear as claimed in any one of claims 1 to 12, characterized in that the shaft (2) rotatable with the roller carrier(s) (5) has or carries external profiles formed in such a way that each produces a momentary form-fit with one roller of the roller carrier in at least two roller planes.

14. An epicyclic roller gear as claimed in any one of claims 1 to 13, characterized in that on that side of the roller carrier(s) (5) which is opposed to the rings (1, 4) and internal profiles thereof, said roller carrier(s) mesh with a rotary body having an external profile, particularly a tooth system, that the rotary body is non-rotatably or integrally connected to the input shaft (2) and has a plurality of parallel toothed rims, the axially adjacent teeth thereof being mutually offset in the circumferential direction by the amount to which the individual rollers (3.1 to 3.4) and teeth of the internal profile of the rings (1, 4) are offset in the circumferential direction.

15. An epicyclic roller gear, particularly as claimed in any one of the preceding claims, characterized in that the number of teeth and/or the shape of the teeth in the circumferential direction of at least one of the two rings (1, 4) and/or of the central rotary body changes over part of the circumference, so that more and/or differently shaped teeth are arranged in one section of the circumference than in one or more other sections.

16. An epicyclic roller gear as claimed in any one of claims 1 to 15, characterized in that the teeth in the axially adjacent planes on the drive element and/or rings are formed in such a way as to have different profiles in sections of the same plane.

17. An epicyclic roller gear as claimed in any one of claims 1 to 16, characterized in that the profile or tooth system of the rings and/or of the central rotary body are formed in such a way that the rings and/or the rotary body have the same profiles or shapes and/or spaces in certain circumferential or angular areas of different planes.

18. An epicyclic roller gear as claimed in any one of claims 1 to 17, characterized in that least one shaft (5.3) or axis is provided for the rotatable mounting of the roller carrier on the arm.

19. An epicyclic roller gear as claimed in any one of claims 1 to 18, characterized in that between circumferential areas of the rings and/or of the central rotary body having different numbers of teeth and/or teeth of different shapes, the teeth and their spacing have a shape enabling a shock-free transition of the relative rotation, in that the transmission function of the transitions between the different profiles of the same plane have at least in the first derivative the value differing from zero, i.e. freedom from shock.

20. An epicyclic roller gear as claimed in any one of claims 1 to 19, characterized in that a drive and/or an output is coupled to the exterior of the rotatable ring (4).

21. An epicyclic roller gear as claimed in any one of claims 1 to 20, characterized in that a lever arm (9.1) for application of a force and/or a tooth system or partial tooth system for co-operating with a complementary tooth system on a gearwheel or a rack or the like are arranged on the outside of the rotatable ring (4), particularly at the outer circumference thereof.

22. An epicyclic roller gear as claimed in any one of claims 1 to 21, characterized in that one or two working cylinders or the like are provided for acting on the external tooth system of the rotatable ring and on a rack or the like meshing therewith.

23. An epicyclic roller gear as claimed in any one of claims 1 to 22, characterized in that vanes mounted for rotation about an axis arranged approximately in radial relationship to the ring may be provided on one, two or more lever arms rigidly connected to the rotatable ring and in the one direction said vanes are arranged with their face crosswise to the diametral plane of the ring (4) and after a turning point they are arranged approximately in that plane.

## Revendications

1. Engrenage épicycloïdal (100) à rouleaux, comprenant deux anneaux (1, 4) pourvus d'un profilage interne ou d'une denture interne, un premier anneau (1) étant fixe et un second anneau (4) étant disposé parallèlement ou coaxialement au premier anneau (1), et étant monté à rotation par rapport à ce dernier, et le nombre de dents étant différent sur le profilage interne des deux anneaux (1, 4) ; et au moins un élément rotatif de roulement (5) pouvant rouler sur la face interne profilée des anneaux (1, 4) et comportant en alternance, sur sa face externe, des interstices et des protubérances qui engrènent avec les profilages internes ou dentures internes des deux anneaux, l'élément de roulement étant monté à rotation sur une membrure (5.1, 5.2) ou pièce similaire, laquelle membrure ou pièce similaire peut tourner autour d'un axe ou arbre (2) disposé au centre des anneaux (1, 4), et entraîne ainsi l'élément de roulement dans le sens périphérique, le long des faces internes des anneaux (1, 4), de sorte que, suite aux nombres de dents différents sur les faces internes des deux anneaux, l'anneau rotatif (4) est mobile par rapport à l'anneau fixe (1), caractérisé par le fait que chacun des deux anneaux (1, 4) présente au moins deux profilages internes (1.1, 1.2 ; 4.1, 4.2) ou dentures internes mutuellement parallèles, agencé(e)s avec déport ou décalage réciproque dans le sens périphérique, d'une fraction du pas du profil ou de la denture, les profilages internes ou dentures internes d'un anneau étant concordant(e)s, mais les profilages internes ou dentures internes des deux anneaux différant toutefois les un(e)s des autres ; par le fait que de nombreux profilages complémentaires munis d'interstices et de protubérances, dont le nombre correspond à celui des profilages internes ou dentures internes des anneaux (1, 4) et qui sont placés en juxtaposition axiale sur l'élément de roulement, sont décalés les uns des autres dans le sens périphérique, d'une manière correspondant au décalage des profilages internes ou dentures internes sur les anneaux ; et par le fait que la protubérance de l'élément de roulement, venant en prise avec l'un des profilages internes ou avec l'une des dentures internes d'un anneau, est engagée vers l'avant, et la protubérance, pénétrant simultanément dans le profilage interne voisin ou dans la denture interne voisine appartenant au même anneau, est engagée dans la direction opposée ; et, au cours du roulement de l'élément de roulement, cette venue en prise de ses protubérances alterne en continu.

2. Engrenage épicycloïdal à rouleaux, selon la revendication 1, caractérisé par le fait que, lorsqu'on utilise deux anneaux présentant respectivement deux profilages internes ou dentures internes mutuellement parallèles, ces derniers (dernières) sont réciproquement décalé(e)s, dans le sens périphérique, d'un demi-pas de profil ou de denture.

3. Engrenage épicycloïdal à rouleaux, selon la revendication 1 ou 2, caractérisé par le fait que l'élément de roulement est un porte-rouleaux (5) monté à rotation, sur le pourtour duquel des rouleaux individuels rotatifs sont respectivement prévus en tant que protubérances destinées à pénétrer dans les dentures internes des anneaux (1, 4) ; par le fait que les rouleaux individuels situés sur le porte-rouleaux (5) sont, à leur tour, décalés dans le sens périphérique sur ledit porte-rouleaux (5), d'une manière correspondant au décalage des profilages internes ou des dentures internes sur les anneaux (1, 4), et sont agencés de telle sorte que des rouleaux, respectivement disposés de manière adaptée, coopèrent ou engrènent avec chaque profilage interne ou denture interne desdits anneaux (1, 4) ; et par le fait que le rouleau, venant en prise avec l'un des profilages internes ou avec l'une des dentures internes d'un anneau, est engagé vers l'avant, et le rouleau, pénétrant simultanément dans le profilage interne voisin ou dans la denture interne voisine appartenant au même anneau, est engagé dans la direction opposée, lesdits rouleaux roulant alternativement, lors de la rotation et de la révolution du porte-rouleaux (5), de façon telle que cette venue en prise des rouleaux (3.1 à 3.4) alterne en continu.

4. Engrenage épicycloïdal à rouleaux, selon l'une des revendications 1 à 3,caractérisé par le fait que le profilage interne ou la denture interne présente, entre les dents individuelles, une configuration en arc de cercle fusionnant, en permanence, dans les flancs des dents ; et par le fait que, lors de la révolution du porte-rouleaux (5), les rouleaux (3.1 à 3.4) roulent alternativement en continu dans l'espace intercalaire entre deux dents du profilage interne de l'anneau.

5. Engrenage épicycloïdal à rouleaux, selon l'une des revendications 1 à 4, caractérisé par le fait que les protubérances ou rouleaux, venant respectivement en prise simultanée avec les dentures internes ou les profilages internes de l'anneau considéré, sont décalé(e)s de façon telle que la venue en prise de l'élément de roulement ou porte-rouleaux, avec l'anneau considéré, s'opère obligatoirement sans aucun jeu.

6. Engrenage épicycloïdal à rouleaux, selon l'une des revendications 1 à 5, caractérisé par le fait qu'au moins deux, trois, quatre protubérances ou rouleaux, voire plus, sont prévu(e)s sur le porte-rouleaux, avec répartition uniforme sur le pourtour, pour chaque profilage interne ou denture interne, si bien que le porte-rouleaux présente, au total, au moins huit, douze ou seize rouleaux.

7. Engrenage épicycloïdal à rouleaux, selon l'une des revendications 1 à 6, caractérisé par le fait qu'au moins deux porte-rouleaux montés à rotation, présentant une forme et une taille concordantes et situés préférentiellement à l'opposé l'un de l'autre sur une ligne diamétrale, ou bien trois porte-rouleaux uniformément répartis sur le pourtour intérieur des anneaux, sont prévus sur la membrure.

8. Engrenage épicycloïdal à rouleaux, selon l'une des revendications 1 à 7, caractérisé par le fait que des jeux de rouleaux, agencés en juxtaposition axiale, sont prévus au nombre total de quatre sur le porte-rouleaux, jeux dans lesquels les rouleaux, engrenant respectivement avec un profilage interne ou une denture interne, sont uniformément répartis sur le pourtour, les rouleaux réciproquement décalés dans le sens périphérique, conçus pour coopérer avec l'un des anneaux, et ceux conçus pour coopérer avec l'autre anneau, étant à chaque fois mutuellement coaxiaux ou accusant, respectivement, un décalage concordant dans le sens périphérique du porte-rouleaux.

9. Engrenage épicycloïdal à rouleaux, selon l'une des revendications 1 à 8, caractérisé par le fait que les rouleaux disposés dans une zone concordante du pourtour du porte-rouleaux, conçus pour coopérer respectivement avec un profilage interne ou une denture interne des deux anneaux, sont agencés sur un axe continu ; et par le fait que tous les axes, portant les rouleaux réciproquement décalés dans le sens périphérique, sont prévus de manière ininterrompue dans le sens axial sur le porte-rouleaux, un axe sur deux portant les rouleaux correspondants avec décalage respectif.

10. Engrenage épicycloïdal à rouleaux, selon l'une des revendications 1 à 9, caractérisé par le fait que l'anneau monté à rotation est relié, par l'intermédiaire d'un disque (101) ou d'une cloche notamment relié(e) à sa face extrême et/ou à sa face externe, à un arbre mené (102) situé dans l'alignement de l'arbre menant (2).

11. Engrenage épicycloïdal à rouleaux, selon l'une des revendications 1 à 10, caractérisé par le fait que l'entraînement d'entrée et l'entraînement de sortie sont permutés pour une démultiplication en vue d'accroître la vitesse angulaire.

12. Engrenage épicycloïdal à rouleaux, selon l'une des revendications précédentes, comprenant deux anneaux (1, 4) profilés intérieurement, un arbre (2) et un porte-rouleaux (5) relié audit arbre (2), et garni de rouleaux ou d'éléments de roulement, caractérisé par le fait que les anneaux (1, 4) profilés intérieurement présentent, respectivement, au moins deux plans de profilage voisins l'un de l'autre, et le porte-rouleaux (5) comporte au moins quatre plans de roulement pouvant tourner autour de l'arbre (2) ; et par le fait que les profils (1.1, 1.2 ; 4.1, 4.2) des anneaux (1, 4) sont usinés de façon telle qu'ils constituent un assemblage instantané, par concordance de formes, avec au moins un rouleau respectif (3.1, 3.2, 3.3, 3.4) des plans de roulement ne comprenant pas moins de deux rouleaux pour chaque plan.

13. Engrenage épicycloïdal à rouleaux, selon l'une des revendications 1 à 12, caractérisé par le fait que l'arbre (2), pouvant tourner avec le ou les porte-rouleaux (5), présente ou porte des profilages externes usinés de façon telle qu'ils constituent avec un rouleau considéré du porte-rouleaux, en permanence au moins dans deux plans de roulement, un assemblage instantané par concordance de formes.

14. Engrenage épicycloïdal à rouleaux, selon l'une des revendications 1 à 13, caractérisé par le fait que le ou les porte-rouleaux (5) engrène(nt), sur son (leur) côté opposé aux anneaux (1, 4) et au profilage interne de ces derniers, avec un corps rotatif présentant un profilage externe, notamment un corps rotatif muni d'une denture ; par le fait que le corps rotatif est verrouillé en rotation avec l'arbre menant (2), ou est relié à ce dernier d'un seul tenant ; et par le fait qu'il comporte plusieurs couronnes dentées parallèles dont les dents juxtaposées dans le sens axial sont réciproquement décalées, dans le sens périphérique, de la valeur dont les rouleaux individuels (3.1 à 3.4) et les dents du profilage interne des anneaux (1, 4) sont décalés dans le sens périphérique.

15. Engrenage épicycloïdal à rouleaux, notamment selon l'une des revendications précédentes, caractérisé par le fait que le nombre des dents et/ou la forme des dents varie sur une partie du pourtour, dans le sens périphérique d'au moins l'un des deux anneaux (1, 4) et/ou du corps rotatif central, de telle sorte qu'un segment du pourtour présente des dents plus nombreuses et/ou configurées autrement que sur un ou plusieurs autre(s) segment(s).

16. Engrenage épicycloïdal à rouleaux, selon l'une des revendications 1 à 15, caractérisé par le fait que les dents situées dans les plans mutuellement voisins dans le sens axial sont usinées, sur le corps rotatif central et/ou sur les anneaux, de façon telle qu'elles présentent des profils différents dans des zones partielles du même plan.

17. Engrenage épicycloïdal à rouleaux, selon l'une des revendications 1 à 16, caractérisé par le fait que le profilage ou la denture des anneaux et/ou du corps rotatif central est réalisé(e) de façon telle que les anneaux et/ou le corps rotatif central présente(nt) des profils ou des formes et/ou des espacements identiques dans des zones périphériques ou angulaires déterminées de plans différents.

18. Engrenage épicycloïdal à rouleaux, selon l'une des revendications 1 à 17, caractérisé par le fait qu'au moins un arbre (5.3) ou axe est prévu pour le montage rotatif du porte-rouleaux sur la membrure.

19. Engrenage épicycloïdal à rouleaux, selon l'une des revendications 1 à 18, caractérisé par le fait que, entre des zones périphériques des anneaux et/ou du corps rotatif central présentant des nombres de dents et/ou des formes de dents différent(e)s, les dents et leur espacement possèdent une forme autorisant une phase transitoire sans à-coups de la rotation relative, du fait que la fonction de transmission des phases transitoires entre les différents profils du même plan considéré présente respectivement, au moins dans la première dérivée, la valeur différant de zéro ou l'absence d'à-coups.

20. Engrenage épicycloïdal à rouleaux, selon l'une des revendications 1 à 19, caractérisé par le fait qu'un entraînement d'entrée et/ou un entraînement de sortie est accouplé extérieurement à l'anneau rotatif (4).

21. Engrenage épicycloïdal à rouleaux, selon l'une des revendications 1 à 20, caractérisé par le fait qu'un bras de levier (9.1) destiné à une application de forces, et/ou une denture ou denture partielle conçue pour coopérer avec une denture complémentaire façonnée sur une roue dentée, une crémaillère ou un organe similaire, est disposé(e) à la face externe de l'anneau rotatif (4), notamment sur son pourtour extérieur.

22. Engrenage épicycloïdal à rouleaux, selon l'une des revendications 1 à 21, caractérisé par le fait qu'un ou deux vérin(s) de travail, ou élément(s) similaire(s), est (sont) prévu(s) pour la venue en prise avec la denture externe de l'anneau rotatif et avec une crémaillère ou organe similaire, engrenant dans ladite denture.

23. Engrenage épicycloïdal à rouleaux, selon l'une des revendications 1 à 22, caractérisé par le fait que des ailettes, prévues sur un, deux ou plusieurs bras de levier relié(s) rigidement à l'anneau rotatif, sont montées à rotation autour d'un axe disposé sensiblement dans le sens radial par rapport audit anneau, ailettes dont la surface est agencée, dans l'une des directions, transversalement par rapport au plan diamétral de l'anneau (4), et qui sont situées sensiblement dans ce plan après une zone de renversement.
